(19) **Europäisches Patentamt**

**European Patent Office**

**Office européen des brevets**

(11) **EP 0 990 935 B1**

(12) **EUROPEAN PATENT SPECIFICATION**

(45) Date of publication and mention
of the grant of the patent:
**01.03.2006 Bulletin 2006/09**

(51) Int Cl.:
*G02B 13/24* (2006.01)          *G02B 9/44* (2006.01)
*G02B 9/56* (2006.01)

(21) Application number: **99119245.1**

(22) Date of filing: **28.09.1999**

(54) **Lens for copying and image copying apparatus using the same**

Kopierobjektiv und dessen Verwendung in einem Bildkopiergerät

Objectif pour copier et appareil de copie d'image l'utilisant

(84) Designated Contracting States:
**DE ES FR GB IT NL**

(30) Priority: **30.09.1998 JP 29296298**

(43) Date of publication of application:
**05.04.2000 Bulletin 2000/14**

(73) Proprietor: **CANON KABUSHIKI KAISHA**
**Tokyo (JP)**

(72) Inventors:
• **Matsuoka, Kazuhiko**
**Ohta-ku,**
**Tokyo (JP)**
• **Fukasawa, Motomu**
**Ohta-ku,**
**Tokyo (JP)**

(74) Representative: **Weser, Wolfgang**
**Weser & Kollegen,**
**Patentanwälte,**
**Radeckestrasse 43**
**81245 München (DE)**

(56) References cited:
DE-B- 2 714 497          US-A- 4 285 579
US-A- 5 506 729          US-A- 5 671 094

• **PATENT ABSTRACTS OF JAPAN vol. 011, no. 178 (P-584), 9 June 1987 (1987-06-09) -& JP 62 009310 A (KONISHIROKU PHOTO IND CO LTD), 17 January 1987 (1987-01-17)**

EP 0 990 935 B1

**Description**

BACKGROUND OF THE INVENTION

Field of the Invention

This invention relates to a lens for copying and an image copying apparatus using the same, and is suitable for an analog copying apparatus comprising a symmetrical type lens of a four-unit four-lens construction centering around a stop having F number 9.5 and a maximum half angle of view of the order of 23° and high optical performance over an entire image field which is suitable when for example, copying is effected with image information on the surface of an original imaged on the surface of a photosensitive member.

Related Background Art

There has heretofore been proposed an apparatus designed to copy image information on the surface of an original with the image information imaged on the surface of a photosensitive member at a predetermined magnification by a lens for copying. The lens for copying used in such an apparatus is required to have a wide angle of view and be compact in the entire lens system and moreover have predetermined optical performance.

Various symmetrical type lenses for copying of a four-unit four-lens construction centering around a stop adopted for such a purpose are proposed, for example, in Japanese Patent Publication Nos. 60-51091 and 5-56485, etc.

The lens system for copying disclosed in Japanese Patent Publication No. 60-51091 comprises a lens system of a four-lens construction symmetrically disposed around a stop, and a positive first lens having convex lens surfaces, a negative second lens having concave lens surfaces, a stop, a third lens of the same shape as the second lens, and a fourth lens of the same shape as the first lens are disposed in succession from the object side.

The lens for copying disclosed in Japanese Patent Publication No. 5-56485 comprises a four-unit four-lens construction disposed symmetrically with respect to a stop disposed at the center of the lens system, and the lens components thereof as viewed from the object side are such that a first lens is comprised of a positive lens having convex lens surfaces, a second lens is comprised of a negative lens having concave lens surfaces, a third lens is comprised of a negative lens of the same shape as the second lens, and a fourth lens is comprised of a positive lens of the same shape as the first lens.

These lenses for copying, however, have been insufficient from the viewpoint of widening the angle of view.

SUMMARY OF THE INVENTION

It is the object of the present invention to appropriately set the lens construction of a lens for copying of a four-unit four-lens construction disposed symmetrically about a stop to thereby provide a lens for copying which has excellent imaging performance over a wide angle of view having a maximum half angle of view of the order of 23° and which is compact and simple in construction, and an image copying apparatus using the same.

The lens for copying of the present invention is a lens for copying disposed symmetrically about a stop, comprising, in succession from the object side, a positive first lens in which two lens surfaces comprise convex lens surfaces, a negative second lens in which two lens surfaces comprise concave lens surfaces, a stop, a third lens of the same shape as the second lens, and a fourth lens of the same shape as the first lens,
characterized in that when the focal length of the entire system is defined as F and the focal length of the first lens is defined as fl and the radius of curvature of the i-th lens surface is defined as ri and the thickness or air space of the i-th lens is defined as di and the refractive index of the material of the i-th lens is defined as ni, it satisfies the following conditions:

$$0.25 \leq f1/F \leq 0.35 \qquad \ldots (1)$$

$$1.35 \leq r2/r3 \leq 1.45 \qquad \ldots (2)$$

$$-0.55 \leq r1/r2 \leq -0.45 \qquad \ldots (3)$$

$$2.2 \leq 3 \times d4/(d1+d2+d3) \leq 2.8 \qquad \ldots (4)$$

$$0.08 \leq n1-n2 \leq 0.11 \qquad \ldots (5)$$

Also, the lens for copying of the present invention is further characterized in that it satisfies the condition that

$$2.35 \leq 3 \times d4/(d1+d2+d3) \leq 2.65 \qquad \ldots (4')$$

and is used within the range of 1/2 time to 2 times of the imaging magnification of the lens for copying.

Also, the image copying apparatus of the present invention is characterized in that by the use of the above-described lens for copying, an image is formed on the surface of a photosensitive member.

BRIEF DESCRIPTION OF THE DRAWINGS

Fig. 1 is a cross-sectional view of the lens of Numerical Value Embodiment 1 of the present invention;
Fig. 2 shows the aberrations during the one-to-one magnification imaging of Numerical Value Embodiment 1 of the present invention;
Fig. 3 shows the aberrations during the 1/2 reduction imaging of Numerical Value Embodiment 1 of the present invention;
Fig. 4 shows the aberrations during the one-to-one magnification imaging of Numerical Value Embodiment 2 of the present invention;
Fig. 5 shows the aberrations during the 1/2 reduction imaging of Numerical Value Embodiment 2 of the present invention; and
Fig. 6 is a schematic view of essential portions when the lens for copying of the present invention is applied to an image copying apparatus.

DESCRIPTION OF THE PREFERRED EMBODIMENTS

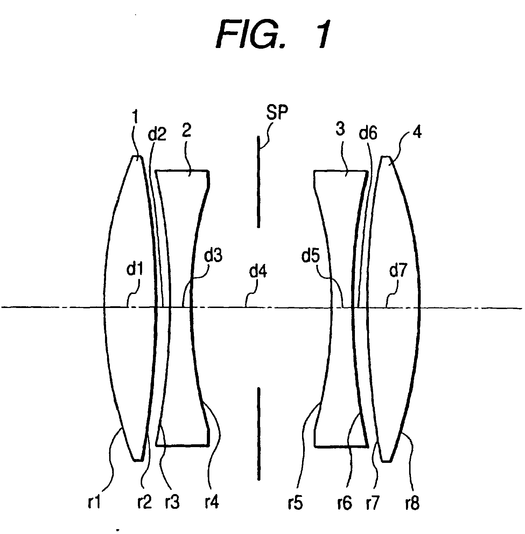

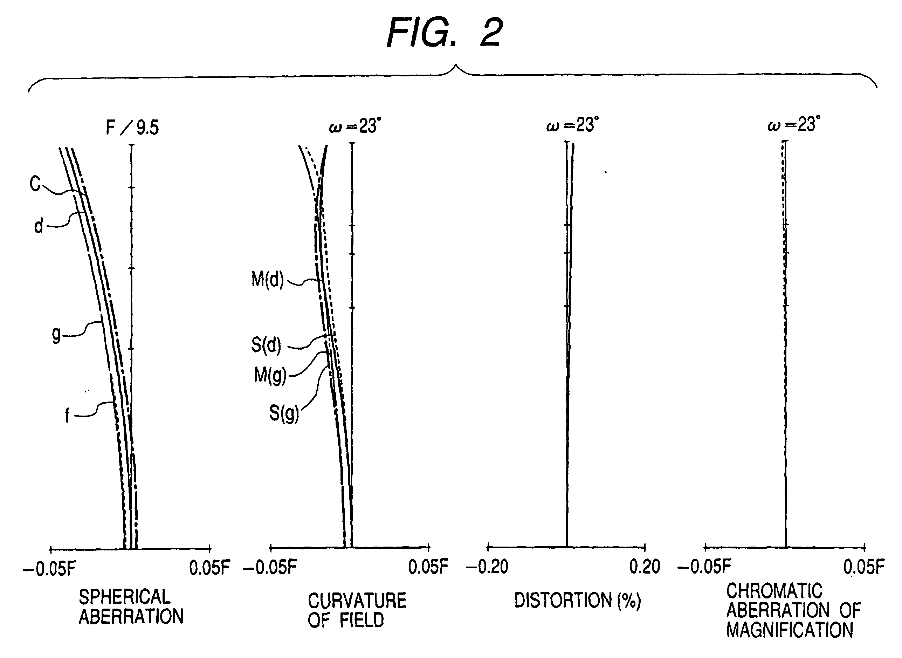

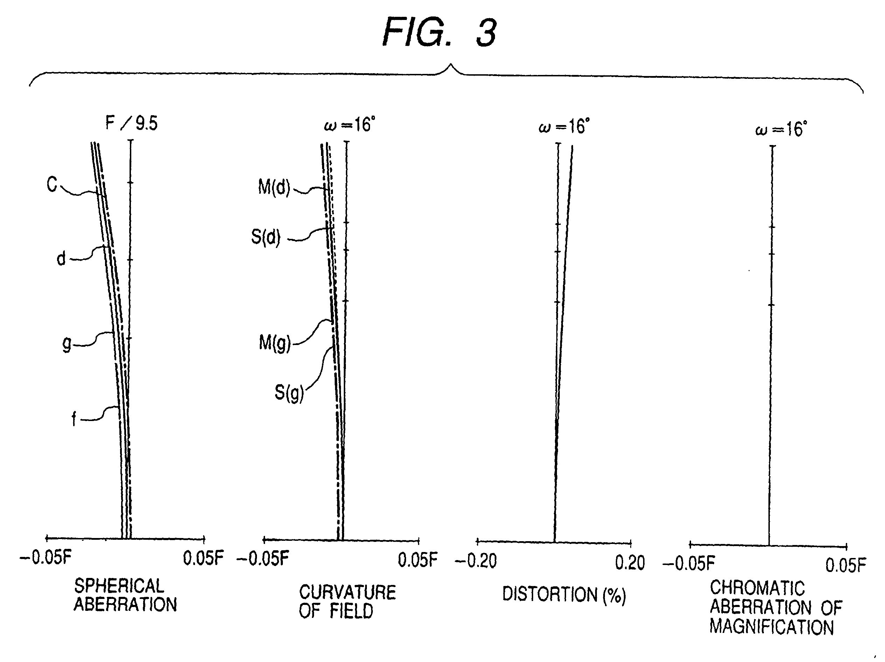

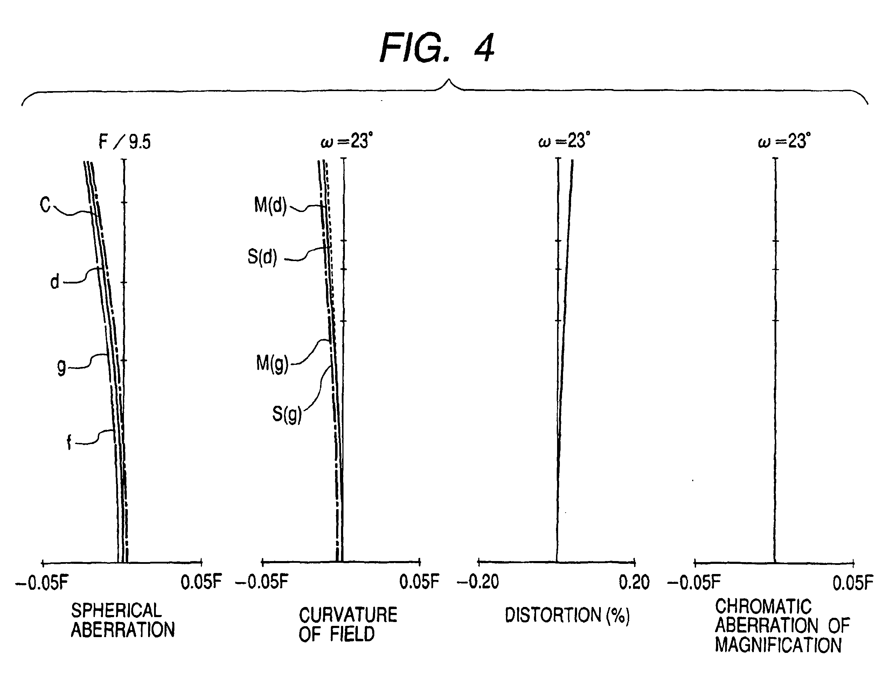

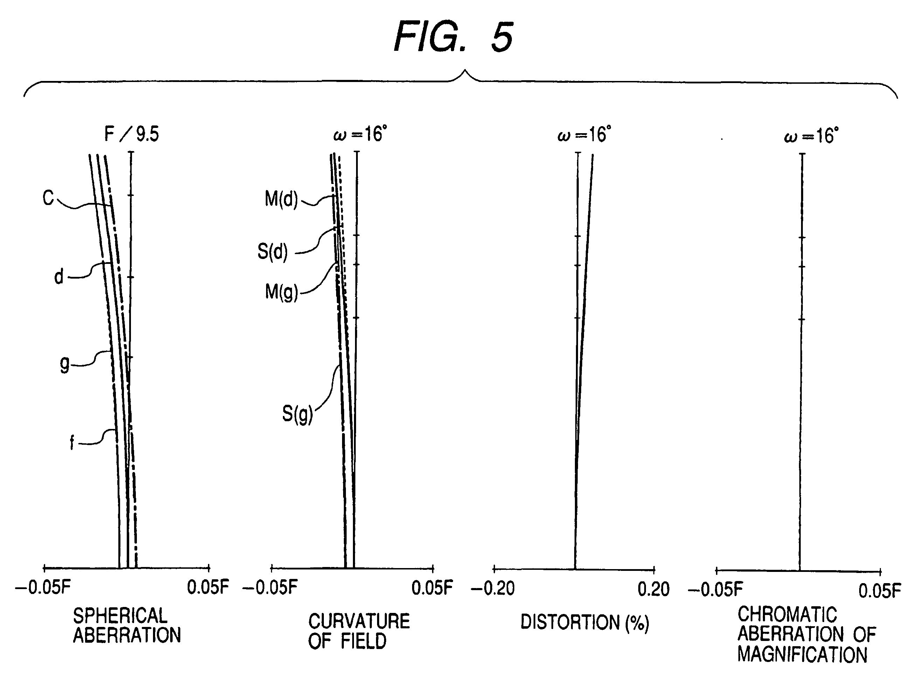

Fig. 1 is a cross-sectional view of the lens of Numerical Value Embodiment 1 of the present invention which will be described later, Fig. 2 shows the aberrations (spherical aberration, curvature of image field, distortion and chromatic aberration of magnification) during the one-to-one magnification of Numerical Value Embodiment 1 of the present invention which will be described later when F number at infinity is 9.5 and the maximum half angle of view is 23°, Fig. 3 shows the aberrations during the 1/2 reduction of Numerical Value Embodiment 1 of the present invention which will be described later when F number at infinity is 9.5 and the maximum half angle of view is 16°, Fig. 4 shows the aberrations during the one-to-one magnification of Numerical Value Embodiment 2 of the present invention which will be described later when F number at infinity is 9.5 and the maximum half angle of view is 23°, and Fig. 5 shows the aberrations during the 1/2 reduction of Numerical Value Embodiment 2 of the present invention which will be described later when F number at infinity is 9.5 and the maximum half angle of view is 16°. In the figures showing spherical aberration, solid line, dots-and-dash line, dot-and-dash line and broken line represent the characteristics at the wavelengths of d-line (588 nm), g-line (436 nm), c-line (656 nm) and f-line (486 nm), respectively. In the figures showing the curvature of image field, solid line, broken line, dots-and-dash line and dot-and-dash line represent the characteristics of the curvature of meridional image field and curvature of sagittal image field at d-line (588 nm) and the curvature of meridional image field and curvature of sagittal image field at g-line (436 nm), respectively.

The lens for copying according to the present embodiment, as shown in Fig. 1, comprises a four-unit four-lens construction in which a positive first lens 1 having convex lens surfaces, a negative second lens 2 having concave lens surfaces, a stop SP, a third lens 3 of the same shape as the second lens 2 and a fourth lens 4 of the same shape as the first lens 1 disposed in succession from the object side and disposed symmetrically about the stop SP.

In the present embodiment, as shown in Fig. 1, the lens for copying is comprised of a four-unit four-lens construction disposed symmetrically about the stop SP, and the refractive power of each lens, the lens intervals, etc. are set as shown by conditional expressions (1) to (5), whereby there is obtained a lens for copying having good optical performance at a wide angle of view of a maximum half angle of view of the order of 23°.

The technical meanings of the aforementioned conditional expressions (1) to (5) will now be described.

Conditional expression (1) is concerned with the ratio between the focal length of the first lens and the focal length of the entire system, and if the ratio falls below the lower limit value of conditional expression (1), spherical aberration will become over-corrected and a greater aperture ratio will become difficult to realize, and the meridional image field will become under-corrected, and this is not good. If the ratio exceeds the upper limit value of conditional expression (1), the meridional image field will become over-corrected and astigmatic difference will become great and this is inconvenient for a wider angle of view and thus is not good.

Conditional expression (2) is concerned with the ratio between the radius of curvature of the stop side surface of the first lens and the radius of curvature of the object side surface of the second lens, and if the ratio falls below the lower limit value of conditional expression (2), spherical aberration will become over-corrected and this is not good. If the ratio exceeds the upper limit value of conditional expression (2), astigmatic difference will become great and this is not good.

Conditional expression (3) is concerned with the ratio between the radius of curvature of the object side surface of the first lens and the radius of curvature of the stop side surface of the first lens, and is the bending condition of the first lens suitable when the compatibility of the correction of spherical aberration and the correction of coma is taken into account, and if the range of conditional expression (3) is departed from, the bending condition of the first lens cannot be satisfied and this is not good.

Conditional expression (4) is concerned with the ratio between the value of the air space between the second lens and the third lens multiplied by 3 and the value of the on-axis thickness of the first lens, the air space between the first lens and the second lens and the on-axis thickness of the second lens added together, and if the ratio falls below the lower limit value of conditional expression (4), the correction of coma will become difficult and this is not good. If the ratio exceeds the upper limit value of conditional expression (4), the influence of the eccentricity error during the assembly of the second and third lenses upon the imaging performance will become remarkable and the lens for copying will become very difficult to manufacture, and this is not good.

Conditional expression (5) is concerned with the difference between the refractive index of the material of the first lens and the refractive index of the material of the second lens, and if the difference falls below the lower limit value of conditional expression (5), spherical aberration will become over-corrected and meridional image field will also become over-corrected and astigmatic difference will become great, and this is not good. If the difference exceeds the upper limit value of conditional expression (5), meridional image field will become under-corrected and this is not good.

This lens for copying functions sufficiently by satisfying the above-described conditions, but it is good to further set the numerical value range of the above-described conditional expression (4) as follows:

$$2.35 \leq 3 \times d4/(d1+d2+d3) \leq 2.65 \qquad \ldots (4')$$

That is, by satisfying conditional expression (4'), good imaging performance can be obtained even under the conditions of the other imaging magnifications than the one-to-one magnification, i.e., in a reduction system of 1/2 time to an enlargement system of 2 times.

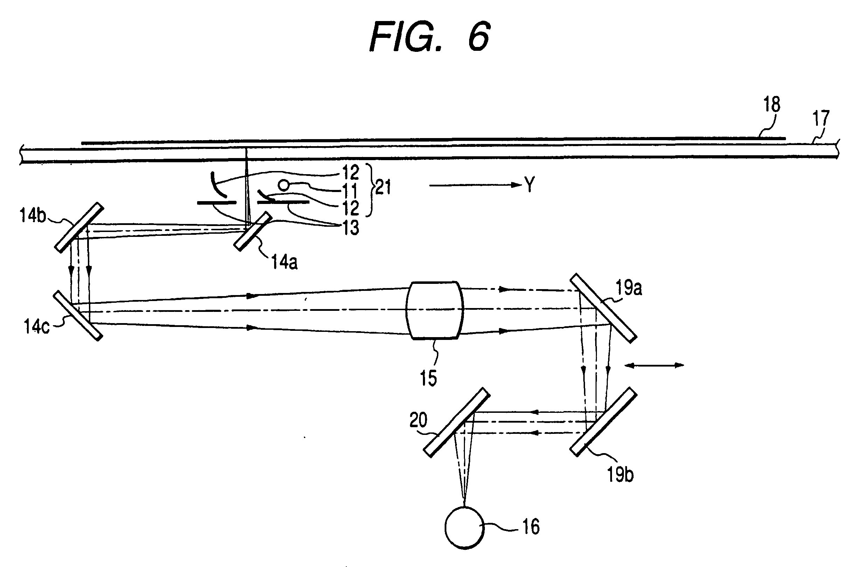

Fig. 6 is a schematic view of essential portions when the lens for copying of the present invention is applied to an analog copying apparatus.

In Fig. 6, reference numeral 18 designates an original placed on original supporting glass 17. Reference numeral 21 denotes illuminating means comprising a light source 11 such as a halogen lamp or a fluorescent lamp, a reflector 12, etc. Reference numeral 13 designates a stop (slit) having an opening portion long in a direction perpendicular to the plane of the drawing sheet of Fig. 6 which is the direction of generating line of a photosensitive drum 16 (the main scanning direction), and it controls a light beam from the surface of the original 18. Reference characters 14a, 14b and 14c denote first, second and third scanning mirrors which direct the light beam passed through the stop 13 to a lens 15 for copying which will be described later. Reference numeral 15 designates a lens for copying (imaging lens) according to the present invention which comprises the aforedescribed construction and causes the light beam based on image information on the surface of the original 18 to be imaged on the surface of the photosensitive drum 16.

In the present embodiment, the original 18 placed on the original supporting glass 17 is illuminated from the both sides thereof by the direct light from the light source 11 and the light beam via the reflector 12. The light beam from the original 18 passes through the opening portion of the stop 13 and is imaged on the surface of the photosensitive drum 16 through the intermediary of the first, second and third scanning mirrors 14a, 14b and 14c by the lens 15 for copying via movable mirrors 19a and 19b and a fixed bending mirror 20, and a latent image is formed in conformity with the light and shade of the original 18. Also, a first mirror stand comprising the light source 11, the reflector 12, the stop 13 and the first scanning mirror (full speed scanning mirror) 14a is moved in the subscanning direction (the direction of arrow Y in Fig. 6) and further, a second mirror stand comprising the second and third scanning mirrors (half speed scanning mirrors) 14b and 14c is moved in the same direction at a half speed of that of the first mirror stand (the movement speed ratio 2:1), whereby the image information of the original 18 is copied while the optical path length from the original 18 to the photosensitive drum 16 is kept constant. Further, when focal length change is to be effected by the use of the lens of the present invention, the movable mirrors 19a, 19b and the lens 15 for copying are moved so as to provide a predetermined magnification, whereafter the image is copied by the scanning mirror 14.

The numerical value embodiments of the present invention will be shown below. In the numerical value embodiments, ri represents the radius of curvature of i-th lens surface from the object side, di represents the thickness or air space of the i-th lens from the object side, and ni and vi represent the refractive index and Abbe number, respectively, of the glass of the i-th lens from the object side. In the numerical value embodiments, the focal length F of the entire system is regularized as F = 1.

Also, the relations between the aforementioned conditional expressions and the numerical values in the numerical value embodiments are shown in Table 1 below.

[Numerical Value Embodiment 1]

| surface No. | r | d | n | ν |
|---|---|---|---|---|
| 1 | 0.267024 | 0.028409 | 1.61800 | 63.39 |
| 2 | -0.550602 | 0.008382 | | |
| 3 | -0.401603 | 0.010801 | 1.51742 | 52.41 |
| 4 | 0.290317 | 0.041347 | | |
| 5 | -0.290317 | 0.010801 | 1.51742 | 52.41 |
| 6 | 0.401603 | 0.008382 | | |
| 7 | 0.550602 | 0.028409 | 1.61800 | 63.39 |
| 8 | -0.267024 | | | |

[Numerical Value Embodiment 2]

| surface No. | r | d | n | ν |
|---|---|---|---|---|
| 1 | 0.267108 | 0.029655 | 1.60311 | 60.70 |
| 2 | -0.521165 | 0.008835 | | |
| 3 | -0.380701 | 0.010579 | 1.51118 | 51.02 |
| 4 | 0.299495 | 0.039109 | | |
| 5 | -0.299495 | 0.010579 | 1.51118 | 51.02 |
| 6 | 0.380701 | 0.008835 | | |
| 7 | 0.521165 | 0.029655 | 1.60311 | 60.70 |
| 8 | -0.267108 | | | |

Table 1

| Conditional expression | Numerical value embodiment | |
|---|---|---|
| | 1 | 2 |
| (1) f1/F | 0.295 | 0.297 |
| (2) r2/r3 | 1.371 | 1.369 |
| (3) r1/r2 | -0.485 | -0.513 |
| (4) 3xd4/(d1+d2+d3) (4') | 2.606 | 2.391 |
| (5) n1-n2 | 0.106 | 0.092 |

According to the present invention, as previously described, there can be achieved a lens for copying in which the lens construction of the lens for copying of a four-unit four-lens construction disposed symmetrically about a stop is appropriately set and the conditional expressions are satisfied, whereby which has excellent imaging performance over a wide angle of view having a maximum half angle of view of the order of 23° and which is compact and simple in construction, and an image copying apparatus using the same.

**Claims**

1. A lens for copying comprising:

    a lens for copying disposed symmetrically about a stop, said lens for copying comprising, in succession from the object side, a positive first lens in which two lens surfaces comprise convex lens surfaces, a negative second lens in which two lens surfaces comprise concave lens surfaces, a stop, a third lens of the same shape as said second lens, and a fourth lens of the same shape as said first lens,

   wherein when the focal length of the entire system is defined as F and the focal length of said first lens is defined as fl and the radius of curvature of the i-th lens surface is defined as ri and the thickness or air space of the i-th lens is defined as di and the refractive index of the material of the i-th lens is defined as ni, said lens for copying satisfies the following conditions:

$$0.25 \leq fl/F \leq 0.35$$

$$1.35 \leq r2/r3 \leq 1.45$$

$$-0.55 \leq r1/r2 \leq -0.45$$

$$2.2 \leq 3 \times d4/(d1+d2+d3) \leq 2.8$$

$$0.08 \leq n1-n2 \leq 0.11$$

2. A lens for copying according to Claim 1, further satisfying the condition that

$$2.35 \leq 3 \times d4/(d1+d2+d3) \leq 2.65,$$

   and used within the range of 1/2 time to 2 times of the imaging magnification of said lens for copying.

3. A lens for copying according to Claim 1, used in an image copying apparatus for forming image information on the surface of an original on the surface of a photosensitive member.

**Patentansprüche**

1. Kopierobjektiv, das symmetrisch um eine Blende aufgebaut ist und, von der Objektseite ausgehend, in der angegebenen Reihenfolge versehen ist mit einer positiven ersten Linse mit zwei konvexen Linsenflächen, einer negativen zweiten Linse mit zwei konkaven Linsenflächen, einer Blende, einer dritten Linse derselben Gestalt wie die zweite Linse und einer vierten Linse derselben Gestalt wie die erste Linse, wobei die folgenden Bedingungen:

$$0,25 \leq f1/F \leq 0,35$$

$$1,35 \leq r2/r3 \leq 1,45$$

$$-0,55 \leq r1/r2 \leq -0,45$$

$$2,2 \leq 3xd4 \: / \: (d1 + d2 + d3) \leq 2,8$$

$$0,08 \leq n1\text{-}n2 \leq 0,11$$

erfüllt sind; hierbei bedeuten:

F die Gesamtbrennweite der Systems
f1 die Brennweite der ersten Linse
ri der Krümmungsradius der i-ten Linsenfläche
di die Linsendicken bzw. die Luftabstände zwischen den Linsen
ni der Brechungsindex der i-ten Linse.

2. Kopierobjektiv nach Anspruch 1, welches weiterhin die Bedingung

$$2,35 \leq 3 \times d4 \: / \: (d1 + d2 + d3) \leq 2,65$$

erfüllt und im Bereich des 0,5fachen bis 2fachen seiner Bildvergrößerung benutzt wird.

3. Kopierobjektiv nach Anspruch 1, benutzt in einem Bildkopiergerät zur Erzeugung einer Bildinformation von der Oberfläche einer Vorlage auf die Oberfläche eines lichtempfindlichen Teils.


**Revendications**

1. Objectif destiné à la copie comprenant :

un objectif destiné à la copie disposé symétriquement autour d'un diaphragme, ledit objectif destiné à la copie comprenant, à la suite en partant du côté objet, une première lentille convergente dans laquelle deux surfaces de lentilles comprennent des surfaces de lentilles convexes, une seconde lentille divergente dans laquelle deux surfaces de lentilles comprennent des surfaces de lentilles concaves, un diaphragme, une troisième lentille de même forme que ladite seconde lentille, et une quatrième lentille de la même forme que ladite première lentille,

dans lequel, lorsque la distance focale du système entier est définie par F et que la distance focale de ladite première lentille est définie par f1 et le rayon de courbure de la surface de la $i^e$ lentille est défini par ri et l'épaisseur ou l'espacement d'air de la $i^e$ lentille est défini par di et l'indice de réfraction du matériau de la $i^e$ lentille est défini par ni, ledit objectif destiné à la copie satisfait les conditions suivantes :

$$0,25 \: \leq \: f1/F \: \leq \: 0,35$$

$$1,35 \: \leq \: r2/r3 \: \leq \: 1,45$$

$$- 0,55 \leq r1/r2 \leq - 0,45$$

$$2,2 \leq 3 \times d4/(d1 + d2 + d3) \leq 2,8$$

$$0,08 \leq n1 - n2 \leq 0,11$$

2. Objectif destiné à la copie selon la revendication 1, satisfaisant en outre la condition telle que

$$2,35 \leq 3 \times d4/(d1 + d2 + d3) \leq 2,65,$$

et utilisé à l'intérieur de la plage de 1/2 fois à 2 fois le grossissement de formation d'image dudit objectif destiné à la copie.

3. Objectif destiné à la copie selon la revendication 1, utilisé dans un appareil de copie d'image destiné à former des informations d'image de la surface d'un original, sur la surface d'un élément photosensible.

# FIG. 1

FIG. 2

F / 9.5

C
d
g
f

SPHERICAL
ABERRATION

−0.05F        0.05F

ω = 23°

M(d)

S(d)
M(g)

S(g)

CURVATURE
OF FIELD

−0.05F        0.05F

ω = 23°

DISTORTION (%)

−0.20        0.20

ω = 23°

CHROMATIC
ABERRATION OF
MAGNIFICATION

−0.05F        0.05F

EP 0 990 935 B1

## FIG. 3

| SPHERICAL ABERRATION | CURVATURE OF FIELD | DISTORTION (%) | CHROMATIC ABERRATION OF MAGNIFICATION |

F / 9.5  ω = 16°  ω = 16°  ω = 16°

C
d
g
f

M(d)
S(d)
M(g)
S(g)

-0.05F   0.05F   -0.05F   0.05F   -0.20   0.20   -0.05F   0.05F

EP 0 990 935 B1

## FIG. 4

| F / 9.5 | ω =23° | ω =23° | ω =23° |
|---|---|---|---|
| −0.05F          0.05F | −0.05F          0.05F | −0.20          0.20 | −0.05F          0.05F |
| SPHERICAL ABERRATION | CURVATURE OF FIELD | DISTORTION (%) | CHROMATIC ABERRATION OF MAGNIFICATION |

C
d
g
f

M(d)
S(d)
M(g)
S(g)

EP 0 990 935 B1

FIG. 5

FIG. 6

EP 0 990 935 B1